(19) Europäisches Patentamt
European Patent Office
Office européen des brevets

(11) **EP 2 706 537 B1**

(12) **FASCICULE DE BREVET EUROPEEN**

(45) Date de publication et mention
de la délivrance du brevet:
**18.01.2017 Bulletin 2017/03**

(51) Int Cl.:
***G21K 7/00*** *(2006.01)*     ***H01J 35/08*** *(2006.01)*
***G01N 23/04*** *(2006.01)*

(21) Numéro de dépôt: **13183570.4**

(22) Date de dépôt: **09.09.2013**

(54) **Source de rayons x générant un faisceau de taille nanométrique et dispositif d'imagerie comportant au moins une telle source**

Röntgenquelle, die einen nanometergroßen Strahl erzeugt und bildgebendes Gerät mit mindestens einer solchen Quelle

X-ray source generating a nanometer-sized beam and imaging device comprising at least one such source

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.09.2012 FR 1258446**

(43) Date de publication de la demande:
**12.03.2014 Bulletin 2014/11**

(73) Titulaire: **Commissariat à l'Énergie Atomique et aux Énergies Alternatives 75015 Paris (FR)**

(72) Inventeurs:
• **Bleuet, Pierre**
  **38180 Seyssins (FR)**
• **Martin, Nicolas**
  **01300 Peyrieu (FR)**

(74) Mandataire: **Ahner, Philippe BREVALEX 95, rue d'Amsterdam 75378 Paris Cedex 8 (FR)**

(56) Documents cités:
**WO-A1-01/99478    US-A1- 2004 240 613**

## Description

## DOMAINE TECHNIQUE ET ART ANTÉRIEUR

La présente invention se rapporte à une source de rayons X générant un faisceau de rayons X de taille nanométrique et un dispositif d'imagerie comportant au moins une telle source, ledit dispositif étant particulièrement adapté à la caractérisation de structures nanométriques enterrées, et encore plus particulièrement adapté à la caractérisation de structures nanométriques enterrées en trois dimensions.

L'essor de la microélectronique et de la nanoélectronique 3D, i.e. l'intégration en trois dimensions de microsystèmes et nanosystèmes impose de recourir à des moyens d'observation des structures nanométriques enterrées à plusieurs centaines de micromètres dans le matériau.

En outre, les microstructures et nanostructures présentent généralement une structure en trois dimensions que l'on souhaite révéler à haute résolution, jusqu'au nanomètre, par des techniques de caractérisation en trois dimensions résolues spatialement et en profondeur.

Or, les méthodes classiques basées sur la microscopie optique, la microscopie électronique ou les faisceaux d'ions ne permettent pas une telle observation car les interactions mises en jeux ne permettent de voir que la surface des échantillons.

Afin de pouvoir faire une observation de systèmes enterrés, on utilise les rayons X qui sont plus pénétrants, afin de sonder la matière en profondeur en exploitant la différence d'atténuation des rayons X par les différents matériaux.

Les techniques conventionnelles de radiographie X et de tomographie X sont classiquement appliquées aux matériaux, à une échelle allant du millimètre au micromètre. Ces techniques mettent en oeuvre un tube à rayons X qui illumine l'échantillon, les rayons réfléchis sont collectés par un détecteur. Ces techniques offrent une efficacité suffisante pour ces échelles.

En revanche, pour atteindre des résolutions plus élevées, c'est-à-dire nettement inférieures au micromètre, les tubes à rayons X ne sont plus adaptés.

En effet, les tubes à rayons X actuels sont limités par l'échauffement de la cathode et par l'interaction électron-cathode qui est à l'origine de sources de rayons X de tailles trop grandes et donc incompatibles avec les résolutions nanométriques recherchée.

Afin de générer un faisceau de rayons de l'ordre du nanomètre, on peut utiliser un Microscope Electronique à Balayage (MEB) dont les optiques permettent classiquement de créer des faisceaux d'électrons dont la taille est de l'ordre du nanomètre.

Ce faisceau d'électrons interagit avec une cible qui, à son tour, génère un faisceau de rayons X, à la fois par rayonnement de freinage (spectre continu) et par rayonnement de fluorescence. La composition et l'arrangement géométrique de la cible, ainsi que l'énergie des électrons déterminent la distribution en énergie, ou spectre, du faisceau de rayons X ainsi créé.

Cette technique présente un inconvénient majeur. En effet l'interaction électron-cible est décrite par une « poire de diffusion » dont la taille caractéristique peut atteindre plusieurs centaines de nanomètres, même dans le cas où le faisceau incident ne fait que quelques nanomètres. La source de rayons X ainsi formée a alors une taille de plusieurs centaines de nanomètres, qui est supérieure à la taille de faisceau de rayons X souhaitée. Un tel diamètre de faisceau ne permet pas d'obtenir une résolution suffisante.

## EXPOSÉ DE L'INVENTION

C'est par conséquent un but de la présente invention d'offrir une source de rayons X générant un faisceau de rayons X de taille nanométrique qui soit adaptée à l'observation de nanostructure.

C'est également un but de la présente invention d'offrir un dispositif d'imagerie adapté à l'observation de microstructures et de nanostructures enterrées avec une bonne résolution.

Les buts précédemment énoncés sont atteints par une source de rayons X offrant un faisceau dont le diamètre est d'ordre nanométrique comportant une source d'électrons dont le faisceau est de diamètre nanométrique et une cible de génération de rayons X, la cible étant formée par au moins une nanostructure comportant à une extrémité libre un matériau apte à générer des rayons X de haute énergie.

Dans un exemple avantageux, la nanostructure est formée par un nanofil portant à son extrémité libre le catalyseur de nanofil, en un matériau à fort numéro atomique, par exemple en or ou du cuivre, utilisé préalablement pour la formation du nanofil. La taille de ce catalyseur de nanofil est généralement comprise entre 10 nm et 50 nm et définit principalement le diamètre de la poire de diffusion. Il en résulte que le faisceau de rayons X a un diamètre compris entre 10 nm et 50 nm.

Grâce à l'invention, la source de rayons X est confinée à la seule région du nanofil qui présente des matériaux de fort numéro atomique, c'est-à-dire uniquement le catalyseur. La largeur de la poire de diffusion est alors limitée à celle du catalyseur. Au contraire dans les dispositifs de l'état de la technique, l'interaction entre le faisceau d'électron et la pointe se fait sur une zone assez large, la poire d'interaction est donc plus grande que dans le cas d'un nanofil avec catalyseur. La source de rayons X est plus grande et la résolution moins bonne.

En variante, la nanostructure peut encore être réalisée par gravure ou par usinage ionique d'un substrat de silicium recouvert d'une couche d'un matériau apte à générer des rayons X de haute énergie, par exemple en or ou en cuivre.

Dans un autre exemple particulièrement avantageux, on utilise une pluralité de nanostructures, chaque nanostructure étant successivement éclairée par le faisceau d'électrons, ce qui permet de réduire l'échauffement de chacune des nanostructures. Un traitement adapté des données fournies par chacune des nanostructures, permet de compenser la variation de position de chacune des nanostructures par rapport à l'échantillon et de moyenner les images afin de créer une image unique virtuelle.

La source d'électrons est avantageusement formée par un microscope électronique à balayage.

Le dispositif comporte alors une source de rayons X selon l'invention, un porte-échantillon et un détecteur. Le détecteur peut être à détection directe ou indirecte. En outre, le porte-échantillon est de préférence mobile, de manière préférée il présente six degrés de liberté. Une mise en rotation du porte-échantillon permet de réaliser une observation par tomographie de l'échantillon.

La présente invention a alors pour objet une source de rayons X comportant une source d'électrons générant un faisceau d'électrons de taille nanométrique et une cible, ladite cible étant destinée à émettre un faisceau de rayons X par illumination par le faisceau d'électrons, ladite cible comportant au moins une nanostructure, ladite nanostructure comprenant une première portion de matériau apte à générer des rayons X de faible énergie et une deuxième portion de matériau apte à générer des rayons X de forte énergie, la première portion étant solidaire d'un substrat par une extrémité et la deuxième portion recouvrant une extrémité libre de la première portion, lesdites première et deuxième portions présentant un diamètre compris entre 1 nm et 100 nm.

De préférence, le matériau de la première portion a un numéro atomique inférieur à 15, par exemple il s'agit de silicium ou de carbone.

De préférence également, le matériau de la deuxième portion a un numéro atomique supérieur à 20, par exemple il s'agit d'or ou de cuivre.

Avantageusement, les matériaux de première et deuxième portions offrent une bonne conductivité thermique.

Dans une réalisation particulièrement avantageuse, la cible comporte une pluralité de nanostructures juxtaposées. La distance séparant deux nanostructures voisines peut être de l'ordre de quelques dizaines de nanomètres.

La source d'électrons est de préférence un microscope électronique à balayage, celle-ci est particulièrement adaptée dans le cas d'une cible à plusieurs nanostructures.

La disposition des nanostructures peut alors être enregistrée dans une commande de balayage du microscope électronique à balayage de sorte que le faisceau d'électrons émis par le microscope électronique à balayage éclaire successivement toutes les nanostructures.

Préférentiellement, la hauteur de la nanostructure est supérieure ou égale à 500 nm.

Dans un exemple de réalisation avantageux, la première portion est formée par un nanofil et la deuxième portion est formée par un catalyseur ayant servi à la formation du nanofil.

Dans un autre exemple de réalisation, la nanostructure est réalisée par gravure, par exemple gravure ionique réactive, dans un substrat formé dans le matériau de la deuxième portion recouvert d'une couche dans le matériau de la première portion.

Dans un autre exemple de réalisation, la nanostructure est réalisée par usinage, par exemple par usinage ionique, dans un substrat formé dans le matériau de la deuxième portion recouvert d'une couche dans le matériau de la première portion.

La présente invention a également pour objet un dispositif d'imagerie par rayons X comportant au moins une source selon l'invention, un porte-échantillon destiné à porter l'échantillon et au moins un détecteur direct ou indirect des rayons transmis par l'échantillon.

De préférence, le porte-échantillon est mobile au moins en rotation de sorte à permettre une imagerie par tomographie.

Le détecteur peut être est un détecteur à comptage de photons X.

La présente invention a également pour objet un procédé d'imagerie d'un échantillon comportant au moins une microstructure et/ou au moins une nanostructure mettant en oeuvre le dispositif selon l'invention, comportant les étapes :

   a) illumination de la nanostructure par le faisceau d'électrons,
   b) collecte par le détecteur des rayons X transmis par l'échantillon de sorte à obtenir une radiographie de l'échantillon.
   Avantageusement, la source de rayons X comporte plusieurs nanostructures juxtaposées et la source d'électrons est un microscope électronique à balayage, dans lequel les étapes a) et b) sont appliquées à chaque nanostructure successivement, ledit procédé comportant les étapes supplémentaires :
   c) de traitement de chacune des radiographie de sorte à obtenir des radiographies offrant le même agrandissement et/ou étant recalées par rapport à une radiographie de référence,
   d) de moyennage des radiographies ainsi traitées.

## BRÈVE DESCRIPTION DES DESSINS

La présente invention sera mieux comprise à l'aide de la description qui va suivre et des dessins en annexes sur lesquels :

- la figure 1 est une représentation schématique d'un exemple de réalisation d'un dispositif d'imagerie à rayons X selon la présente invention,
- la figure 2 est une vue de détail d'un exemple de cible pouvant être mis en oeuvre dans la source de la figure 1,

- la figure 3 est une représentation schématique de la poire de diffusion de la cible de génération de rayons X de la figure 2,
- la figure 4 est une vue en perspective schématique d'un autre exemple avantageux de cible pouvant être mis en oeuvre dans la source de la figure 1,
- la figure 5 est une représentation schématique de la disposition des nanostructures de la cible par rapport à l'échantillon selon une première direction,
- la figure 6 est une représentation schématique du moyennage des images obtenues par les différentes nanostructures de la figure 5 et par recalage préalable de celles-ci,
- la figure 7 est une représentation schématique de la disposition des nanostructures de la cible par rapport à l'échantillon selon une deuxième direction,
- la figure 8 est une représentation schématique du moyennage des images obtenues par les différentes nanostructures de la figure 7 et par recalage préalable de celles-ci,
- la figure 9 est une représentation schématique d'un exemple de dispositif d'imagerie comportant une cible à trois nanostructures,
- les figures 10A à 10C sont des radiographies d'une mire à partir de chacun des faisceaux de rayons X émis par chacune des microstructures du dispositif de la figure 9 respectivement et leur profil en niveau de gris associés,
- la figure 11 est une radiographie de la mire obtenue par moyennage de trois radiographies des figures 10A à 10C sans recalage des radiographies et son profil en niveau de gris associé,
- les figures 12A et 12B sont les radiographies obtenues à partir des radiographies des figures 10B et 10C respectivement après interpolation cubique et leur profil en niveau de gris associé,
- les figures 13A et 13B sont les radiographies obtenues à partir des radiographies 10A et 12B après un procédé de "zero-padding" respectivement et leur profil en niveau de gris associé,
- la figure 14 est la radiographie après moyennage des radiographies de figures 13A, 13B et 12A, et son profil en niveau de gris ;
- la figure 15 est le profil de la radiographie de la figure 14;
- la figure 16 représente l'intensité des rayons X produits par le silicium et le tungstène en fonction de l'énergie du faisceau d'électrons.

## EXPOSÉ DÉTAILLÉ DE MODES DE RÉALISATION PARTICULIERS

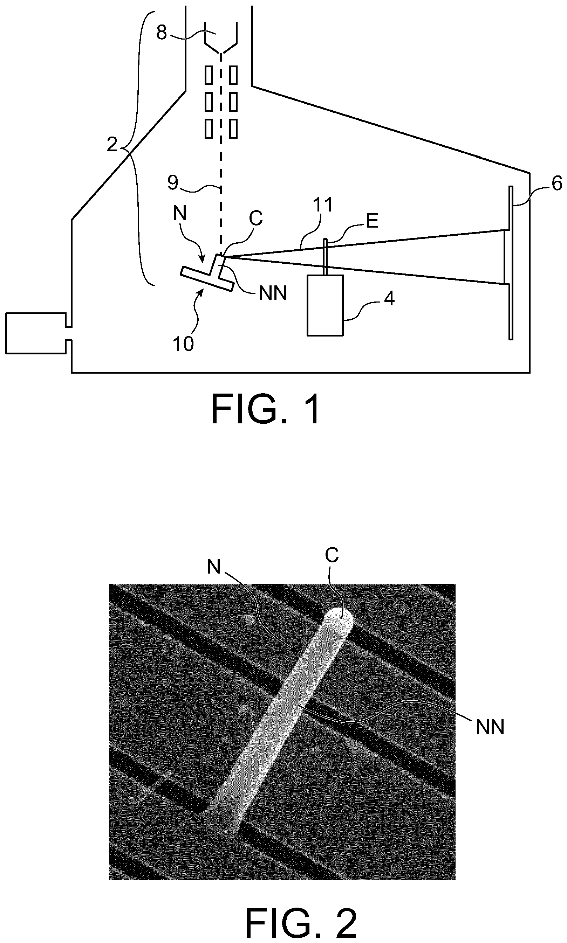

Sur la figure 1, on peut voir une représentation schématique d'un dispositif d'imagerie à rayons X pour microstructures et nanostructures comportant une source de rayons X 2, un porte-échantillon 4 et un détecteur de rayons X 6.

La source de rayons X 2 comporte une source d'électrons 8 et une cible 10 générant un faisceau de rayons X 11 sous l'effet du faisceau d'électrons. La source d'électrons 8 peut être formée par tout canon à électrons capable de délivrer un faisceau 9 suffisamment intense et suffisamment fin pour limiter les pertes. Il peut s'agir d'un canon à électrons muni de lentilles électroniques.

De manière avantageuse, la source d'électrons 8 est formée par un microscope électronique à balayage, désigné par la suite "MEB". Comme nous le verrons par la suite le balayage du faisceau est particulièrement intéressant dans un exemple de réalisation de la présente invention. La structure et le fonctionnement du MEB sont bien connus de l'homme du métier et ne seront pas décrits en détail. Les optiques du MEB permettent de manière connue de créer des faisceaux d'électrons dont la taille est de l'ordre du nanomètre. Ce faisceau d'électrons interagit avec la cible qui, à son tour, génère des rayons X, à la fois par rayonnement de freinage (spectre continu) et par rayonnement de fluorescence.

Le porte-échantillon 4 est destiné à porter l'échantillon E que l'on souhaite imager, et qui sera illuminé par le faisceau de rayons X émis par la cible 10. De manière avantageuse, le porte-échantillon 4 présente six degrés de liberté, i.e. il est mobile le long de trois axes et autour de ces trois axes. La mise en rotation de l'échantillon permet une observation par tomographie.

Le détecteur de rayons X 6 peut être du type à détection directe ou à détection indirecte.

Dans le cas d'un détecteur à détection directe, le cône de rayons X permet de grandir géométriquement l'objet sur le détecteur.

Dans le cas d'un détecteur à détection indirecte, le grandissement géométrique de l'objet peut être couplé à un grandissement optique : les rayons X transmis par l'objet depuis la nano-source interagissent avec un écran scintillateur dont le rôle est de convertir ce rayonnement en rayonnement visible.

L'image visible est alors grandie par une optique et l'image grandie à la fois par le grandissement rayons X et par le grandissement visible est enregistrée sur une caméra CCD conventionnelle. Ce type de détection indirecte est connu par ailleurs et ne sera pas décrite en détail.

La cible est selon un premier exemple de réalisation formée par une nanostructure N comportant un nanofil NN et un catalyseur C de nanofil situé à l'extrémité libre du nanofil NN.

Dans la présente demande, on entend par "nanostructure" une structure de diamètre, et plus généralement de dimension transversale, comprise entre 1 nm et 100 nm.

A des fins de simplicité, le catalyseur de nanofil sera désigné par "catalyseur" uniquement dans la suite de la description.

Sur la figure 2, on peut voir un exemple d'une nanostructure formée par un catalyseur C situé à l'extrémité d'un nanofil NN, l'ensemble formant la cible de génération de rayons X.

Le catalyseur C est mis en oeuvre classiquement pour produire des nanofils et ne joue généralement pas de rôle ultérieur.

Dans le dispositif selon l'invention, il joue le rôle de cible pour générer des rayons X de forte énergie.

De manière connue, on dépose une fine couche de catalyseur, par exemple de l'or, sur un substrat, par exemple en silicium et on effectue ensuite une opération de recuit sous vide qui forme des particules or-silicium. En introduisant un précurseur gazeux de silicium à une température supérieure à l'eutectique, les particules ainsi formées croissent suivant certaines directions et forment des nanofils de silicium ; au sommet de ce nanofil se trouve le catalyseur, en or, donc la taille typique atteint 10-50nm. Cette méthode de croissance de nanofils est la méthode « bottom-up ». Celle-ci est par exemple décrite dans le document Wang, Y et al, Nature Nanotechnology 1, pp 186-189, 2006.

D'une part l'or est apte à générer des rayons X de haute énergie et, d'autre part, le silicium contribue peu à la génération de rayons X, générant principalement des rayons à faible énergie qui contribuent très peu au signal sur le détecteur.

Le catalyseur est alors la source majoritaire de rayons X. Les dimensions transversales de la poire de diffusion sont alors limitées par la dimension transversale du catalyseur, puisqu'il n'y a pas de matière autour du catalyseur dans une direction transversale pouvant générer des rayons X. Dans l'exemple représenté, la section transversale est un disque, le diamètre du catalyseur délimite la poire de diffusion des rayons X ; le diamètre du catalyseur étant par exemple de l'ordre de 10 nm, on obtient une source de rayon X de taille nanométrique.

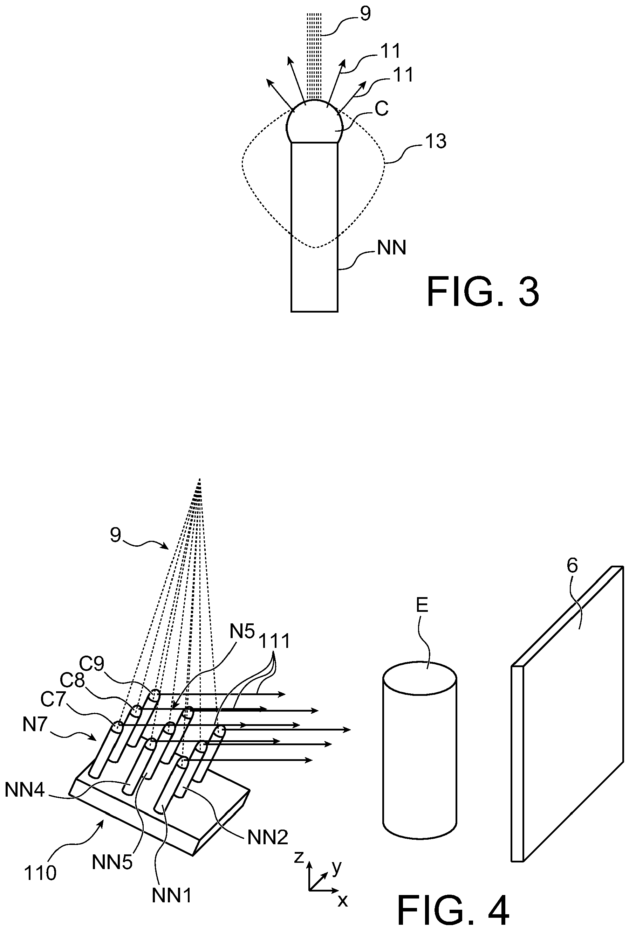

Sur la figure 3, on peut voir une représentation schématique d'une source de rayons X formée par un nanofil et le catalyseur de nanofil porté à l'extrémité libre du nanofil, ainsi que de la poire de diffusion 12 qui est hachurée et est en fait formée par le catalyseur C et une partie du nanofil NN. En pointillés est représentée la poire de diffusion 13 dans le cas d'une cible large connue de l'état de la technique. On constate une réduction sensible de celle-ci.

De préférence, le diamètre typique d'un nanofil et donc du catalyseur pour créer une source de rayons X de taille nanométrique est compris entre 10 nm à 100 nm, afin de créer suffisamment de signal tout en restreignant la poire de diffusion.

La hauteur de la nanostructure est choisie supérieure à la taille de la poire de diffusion de sorte à éviter que celle-ci ne soit en partie dans le substrat et génère d'autres rayons X parasites provoquant une perte de résolution. Par exemple, la hauteur de la nanostructure est supérieure ou égale à 500 nm, et inférieure à 1 μm

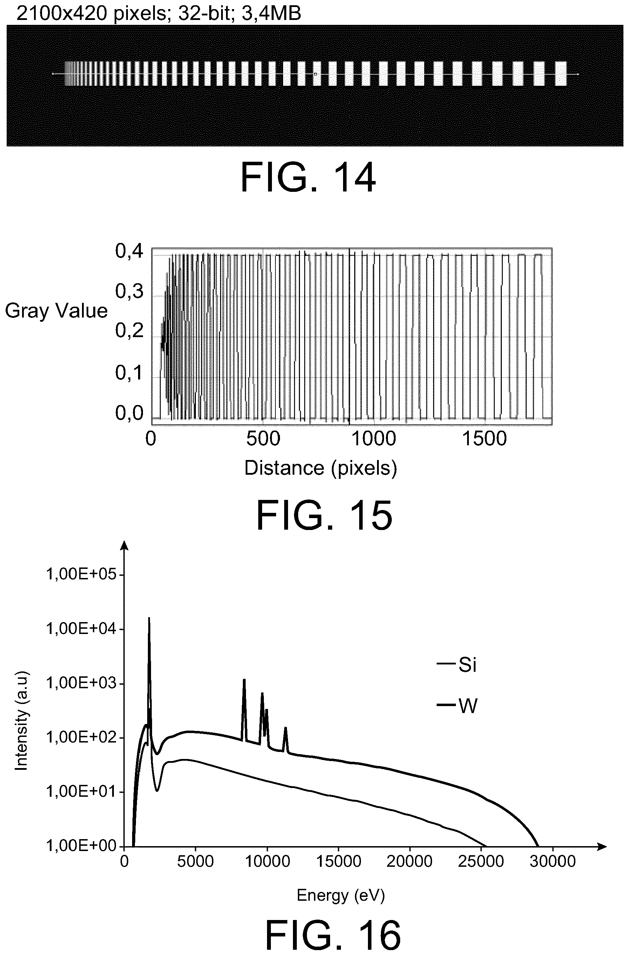

Sur la figure 16, on peut voir représentées les intensités des rayons X produits par le silicium et le tungstène en fonction de l'énergie du faisceau d'électrons

Dans le cas de nanofil de silicium avec un catalyseur métallique, la poire de diffusion atteint la région en silicium comme cela est représenté schématiquement sur la figure 3. Cependant, le spectre de rayons X produit par un matériau de faible numéro atomique, comme le silicium, est très faible par rapport à celui d'un matériau de numéro atomique élevé (comme le catalyseur métallique d'un nanofil). Sur la figure 16, on voit que l'intensité des rayons X produit par le silicium est 10 fois plus faible que celle du tungstène. Ainsi grâce à l'invention mettant en oeuvre un support en matériau à faible numéro atomique tel que le silicium, le support contribue très peu à la génération de rayons X par rapport au catalyseur métallique. Le rayonnement caractéristique du silicium, représenté par un pic à 1700eV, n'est pas détecté car les détecteurs de rayons X pour l'imagerie ont en général une fenêtre de détection comprise entre 3 et 10 keV. Au contraire, les pics caractéristiques d'un métal (pics vers 10keV pour le tungstène) sont dans la fenêtre de détection des détecteurs.

Ainsi grâce à l'invention, la réalisation d'une cible comprenant un support à faible numéro atomique portant à son extrémité libre un matériau à fort numéro atomique permet de confiner la source de rayons X à ce seul matériau à fort numéro atomique La production résiduelle de rayons X par le support, fait par exemple de silicium, est très faible et ne sera pas détectée.

Avantageusement, le nanofil est formé d'un matériau à forte conductivité thermique $\kappa$, afin de dissiper rapidement la chaleur, comme le carbone ou le silicium. En outre, le matériau du nanofil est de préférence tel qu'il contribue peu à la génération de rayons X afin de limiter physiquement la poire de diffusion au catalyseur. Il s'agit des matériaux à bas numéros atomiques, de préférence inférieurs à 15, de manière préférée il s'agit du silicium ou carbone.

Le catalyseur C est également de préférence un matériau à forte conductivité thermique pour évacuer la chaleur, mais en revanche il présente un numéro atomique plus élevé, de préférence supérieur à 20, voir supérieur à 25 pour créer des rayons X de haute énergie, aux énergies souhaitées. De manière avantageuse, il peut s'agir de l'or ou du cuivre. En variante tout métal offrant un point de fusion suffisamment élevé peut convenir, comme par exemple le fer, le cobalt, le nickel...

De préférence, le catalyseur présente une température de fusion élevée de sorte que les élévations locales de températures n'endommagent pas la cible, ainsi que le matériau du nanofil. Par exemple, la nanostructure peut atteindre 100°C.

La réalisation d'une cible par le catalyseur et le nanofil est particulièrement intéressante car elle a recours à une technique connue de réalisation des nanofils. Par conséquent, la fabrication de la cible est bien maîtrisée, en particulier les dimensions de la cible sont bien maîtrisées.

Le faisceau de rayons X de taille nanométrique éclaire l'échantillon qui transmet une partie des rayons X qui sont soit détectés directement par le détecteur, soit préalablement convertis en lumière visible avant d'être détectés.

En utilisant un porte-échantillon mobile, il est avantageusement possible d'effectuer de la tomographie X afin d'obtenir une information en trois dimensions de l'objet observé. A cette fin, on peut faire subir une rotation à l'échantillon devant la nano-sources de rayons X et enregistrer des radiographies à différentes orientations. Cet ensemble de radiographies sert alors, par traitement mathématique, à reconstruire la morphologie 3D interne de l'échantillon.

Avantageusement, la source de rayons X de taille nanométrique basée sur l'illumination du catalyseur d'un nanofil par un faisceau d'électrons est couplée à des schémas de tomographie et de radiographie afin d'en améliorer la résolution spatiale.

Comme décrit ci-dessus, la nanostructure peut être formée par un nanofil et son catalyseur.

Selon une variante, la nanostructure est formée par usinage « dans la masse ». Pour cela, on part d'un substrat dont le matériau est analogue au matériau du nanofil précédemment décrit, par exemple en silicium ou en carbone. Sur ce substrat est déposée une couche mince d'un matériau analogue au matériau du catalyseur précédemment décrit, par exemple de l'or, ou du cuivre. Ensuite par usinage, avantageusement par usinage ionique (ou "Focused Ion Beam" en terminologie anglaise), on prépare une pointe selon la technique lift-out décrite par exemple dans le document Giannuzzi, L.; Stevie, F.; Giannuzzi, L. A.; Kempshall, B. W.; Schwarz, S. M.; Lomness, J. K.; Prenitzer, B. I.; Stevie, F. A., FIB Lift-Out Specimen Préparation Techniques. In Introduction to Focused Ion Beams, Springer US: 2005; pp 201-228]. La pointe a alors des dimensions géométriques similaires au nanofils précédemment décrits : par exemple une section d'environ 10 nm-100 nm, et une hauteur supérieure ou égale à 500 nm.

Selon une autre variante, la nanostructure est formée par gravure. A partir d'un substrat analogue à celui précédemment décrit, on peut utiliser les techniques standards de gravure de la microélectronique. En particulier, les techniques conventionnelles de gravure ionique réactive (RIE pour "Reaction Ion Etching" en terminologie anglaise) permettent par interaction entre un plasma et le substrat de créer des nanofils tels que décrits dans le document A Top-down Approach to Fabrication of High Quality Vertical Heterostructure Nanowire Arrays, Hua Wang, Minghua Sun, Kang Ding, Martin T. Hill, and Cun-Zheng Ning, Nano Letters 2011 11 (4), 1646-1650. Cette méthode de croissance des nanofils est la méthode dite top-down.

Les rayons X étant générés par un volume de matière faible, il en résulte un flux de rayons X de faible intensité qui produit des radiographies avec un faible rapport signal à bruit. De manière avantageuse, on peut alors utiliser un détecteur à comptage de photons X, tels que décrits dans le document WO2004064168 pour compenser ce faible rapport. Un tel détecteur est bien connu de l'homme du métier et ne sera pas décrit en détail.

Sur la figure 4, on peut voir un autre exemple de réalisation d'une cible particulièrement avantageux. La cible 110 comporte une pluralité de nanostructures juxtaposées. Dans cet exemple, les nanostructures sont formées par des nanofils NN1, NN2..., NNn surmontés de leurs catalyseurs C1, C2..., Cn, n étant un entier positif supérieur ou égal à 2. En variante, les nanostructures peuvent être formées par usinage "dans la masse" ou par gravure comme décrits ci-dessus.

Dans l'exemple représenté, les nanofils NN1, NN2..., NNn et les catalyseurs sont disposés en matrice mais une disposition aléatoire ne sort pas du cadre de la présente invention. De préférence, la distance entre deux nanostructures est inférieure à quelques dizaines de micromètres ce qui permet d'éviter d'avoir des différences de grandissement ou des décalages trop importants sur les radiographies comme cela sera expliqué par la suite.

La cible est en fait formé d'une pluralité de nanostructures formées chacune par un catalyseur au sommet d'un nanofil émettant chacune de manière successive un faisceau de rayons X de taille nanométrique schématisé par des flèches 111 sur la figure 4. La combinaison de cette cible avec un MEB est particulièrement avantageuse comme cela est expliqué ci-dessous.

Le fonctionnement d'une telle cible est le suivant : le MEB éclaire successivement pendant un temps donné chaque nanostructure, chacune émettant alors successivement un faisceau de rayons X de taille nanométrique, qui éclaire l'échantillon. Celui-ci transmet alors les rayons X, qui sont détectés directement ou indirectement par le détecteur. Comme nous l'expliquerons par la suite, les données sont traitées de sorte à tenir compte de la position de chaque nanostructure par rapport à l'échantillon.

La mise en oeuvre d'une telle cible permet de manière très avantageuse de réduire l'échauffement de chaque nanostructure, échauffement qui peut être à l'origine d'instabilités et d'une dégradation progressive de la cible.

En effet, le document Reimer, L., 1998. Scanning Electron Microscopy, second ed., Springer, Berlin, p. 118, décrit l'échauffement local induit par un faisceau d'électron d'intensité 1 accéléré par une haute tension $V_0$ dans un MEB. Cet échauffement s'écrit :

$$\Delta T = \frac{1.5}{\pi} \cdot \frac{I.V_0}{\kappa.R}$$

$R$ est le parcours moyen des électrons dans le matériau et $\kappa$ la conductivité thermique du matériau, ce qui correspond au matériau du catalyseur du nanofil dans notre cas.

En appliquant cette formule à un catalyseur en or, avec $I$=2μA et $V_0$=30kV, on obtient un échauffement local pouvant atteindre 100°C. Comme mentionné ci-dessus, cet échauffement peut être responsable d'instabilités et d'une dégradation progressive de la cible générant les rayons X.

Grâce à la mise en oeuvre d'une pluralité de nanostructures, il est possible de réduire cet échauffement. En effet, en éclairant successivement les nanostructures avec un temps de pose sur chaque nanostructure égal au temps de pose global divisé par le nombre de nanostructures, on diminue la dose d'électrons délivrée sur chaque nanostructure.

Chaque nanostructure génère des faisceaux coniques de rayons X qui permettent d'obtenir des projections sur le détecteur comme cela est schématisé sur la figure 4. Dans l'exemple représenté, la cible comporte neuf nanostructures (n = 9) formant neuf sources de taille nanométrique, la dose ainsi déposée est divisée par un facteur 9 et la durée de vie de nanostructure est prolongée d'autant.

Grâce à la mise en oeuvre d'un MEB qui présente des fonctionnalités standard de balayage au moyen du faisceau d'électrons, il est très aisé de venir balayer les différentes nanostructures.

Avec la cible de la figure 4, puisque les nanostructures sont successivement balayées par le faisceau d'électrons et que le détecteur intègre tous les photons X sans distinguer leur nanostructure d'émission, la source globale de rayons X est une somme de toutes les contributions venant de chaque nanostructure, et la source globale devient alors très grande. Le gain peut alors être limité.

De manière très avantageuse afin de pallier cet inconvénient, on enregistre une image à chaque balayage d'une nanostructure. Ainsi on obtient des radiographies distinctes de l'échantillon à partir des rayons X émis par chacune des nanostructures.

Ensuite les radiographies sont traitées pour tenir compte de la position de chaque nanostructure par rapport à l'échantillon. En effet, si on considère un repère xyz comme représenté sur la figure 4, l'axe z étant orienté vers l'échantillon et les axes y et z étant orthogonaux entre eux et à l'axe x, les nanostructures ont des positions différentes dans ce repère par rapport à l'échantillon. Comme on peut le voir sur la figure 4, la matrice de nanostructures est inclinée par rapport aux axes x, y et z impliquant un décalage dans les trois directions.

Un décalage suivant l'axe x induit une différence de grandissement de l'échantillon puisque les nanostructures entourant la nanostructure centrale N5 sont plus près ou plus loin de l'échantillon que le nanofil central N5.

6 de 8 nanostructures entourant la nanostructure centrale N5 sont également décalées suivant l'axe y par rapport à la nanostructure centrale N5 et sont décalées suivant l'axe x par rapport à la nanostructure centrale N5.

Puisque l'on connaît la distribution des nanostructures sur le substrat, on peut traiter les radiographies de sorte à tenir compte de cette variation de position par rapport à l'échantillon. Le MEB peut être programmé pour balayer successivement chaque nanostructure.

Connaissant cette distribution, on peut recalculer numériquement une unique image correspondant à une seule nanostructure à partir de toutes les contributions de toutes les nanostructures, afin de pouvoir moyenner toutes les images dans le même repère et ainsi améliorer le rapport signal à bruit en conservant une taille de source égale à celle d'une nanostructure et ainsi obtenir réellement une source de rayons X de taille nanométrique.

Avant calcul, on obtient alors une série d'images dont le nombre correspond au nombre de nanostructures. Géométriquement, ces images correspondent à la même orientation source-échantillon-détecteur mais sont décalées suivant les trois axes x, y et z du fait du décalage de chaque nanostructure suivant les trois axes x, y et z.

Le calcul de l'unique image virtuelle correspondant à l'émission de rayons X provenant d'un seul point se fait alors par ré-échantillonnage de toutes les images sur une grille commune, comme décrit ci-après. On effectue en fait un recalage des images formées par les photons X émis par les nanostructures par rapport à une nanostructure formant la nanostructure de référence, qui est par exemple la nanostructure centrale désignée N5 sur la figure 4.

Nous allons maintenant décrire le procédé de recalage d'une radiographie acquise à partir d'une nanostructure décalée suivant l'axe X et le moyennage de cette radiographie "recalée" et de celle acquise à partir d'une nanostructure formant la nanostructure de référence.

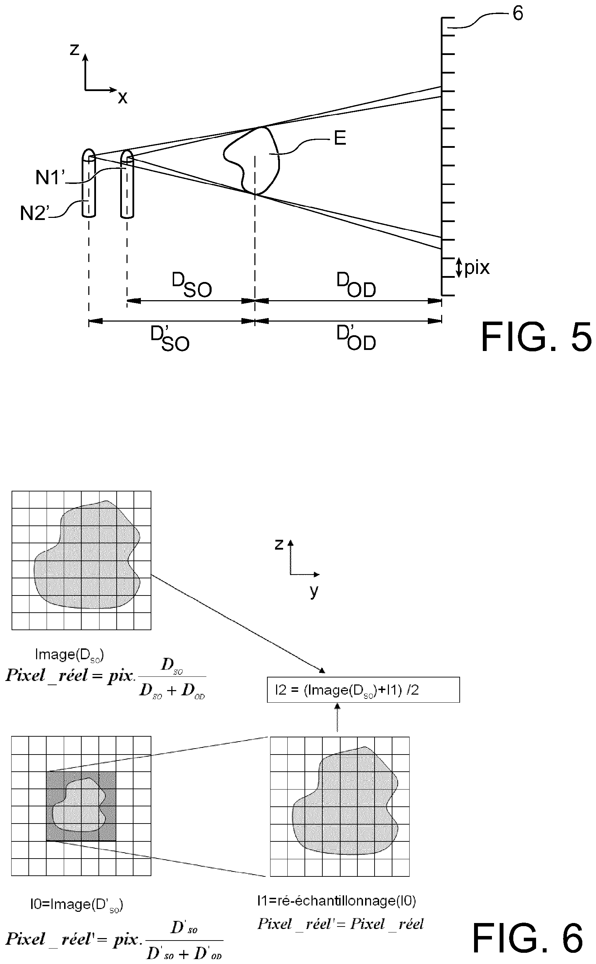

Sur la figure 5, on peut voir représenté le cas de deux nanostructures décalées N1', N2' suivant l'axe X. Dans cette représentation, il s'agit d'un décalage pur suivant l'axe x contrairement à la représentation de la figure 4 où les nanostructures ont à la fois des décalages suivant x, y et z.

On obtient alors des images avec des grandissements différents. Afin de pouvoir sommer les images formées avec des faisceaux de rayons X générés par deux nanostructures ayant des positions décalées, il convient de rééchantillonner les images sur une même grille. La nanostructure N1' est considérée comme la nanostructure de référence.

Lors d'une première étape, on acquiert l'image Image($D_{SO}$) qui est formé à partir des rayons X provenant de la nanostructure N1'. La distance source-objet est désignée $D_{SO}$. A cause du grandissement, la taille de pixel effectif sur l'image est :

$$Pixel\_réel = pix.\frac{D_{so}}{D_{so} + D_{oD}}$$

$D_{OD}$ est la distance objet-détecteur.

Lors d'une étape suivante, on acquiert l'image Image($D'_{SO}$) qui est formée à partir de la source formée par la nanostructure N2'. La distance source-objet est désignée $D'_{SO}$. Cette image, désignée I0, est la moins grandie. La taille de pixel réelle est :

$$Pixel\_réel' = pix.\frac{D'_{so}}{D'_{so} + D'_{od}}$$

Lors d'une étape suivante, l'image I0 est rééchantillonée, par des approches bien connues de l'homme du métier, par exemple décrite dans le document US 20120082396, sur une nouvelle grille dont le pixel est égal au pixel de l'image Image($D_{SO}$). La nouvelle image s'appelle I1 est représentée schématiquement sur la figure 6. Ce rééchantillonnage met par exemple en oeuvre une interpolation, qui peut être une interpolation bicubique. Il est à noter que l'image Image($D_{SO}$) n'a pas besoin d'être recalée.

Dans une étape suivante, les deux images I1 et Image($D_{SO}$) sont moyennées comme cela est représentée schématiquement sur la figure 6, et l'image I2 ainsi formée présente un meilleur rapport signal à bruit mais en conservant la résolution correspondant à un seul nanofil.

Dans le cas d'une multitude de nanofils distribués suivant l'axe X et conduisant donc à la formation d'une multitude de projections à différents grandissements, les étapes sont répétées pour chaque nanostructure afin de ramener toutes les images au même grandissement.

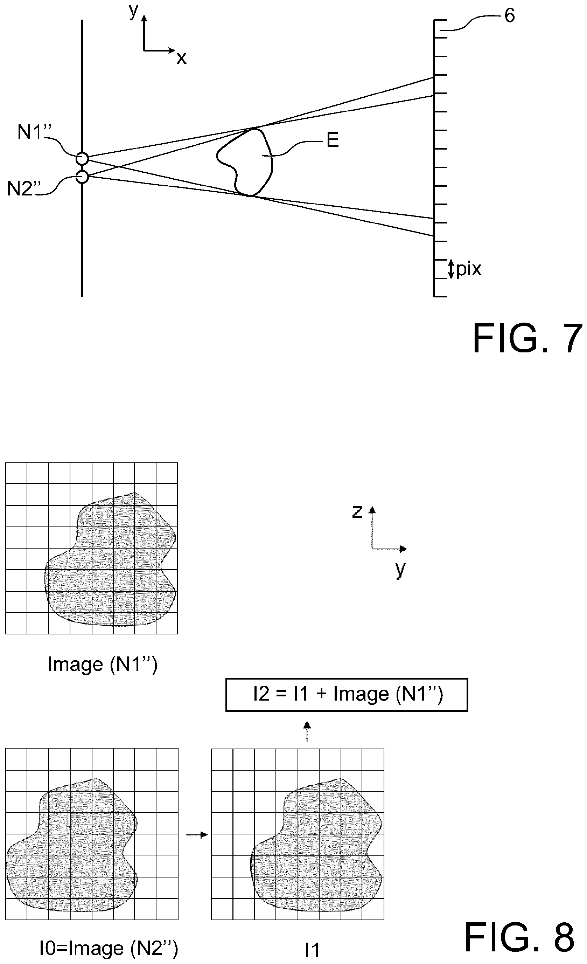

Nous allons maintenant décrire le procédé de recalage dans le cas d'un décalage de deux nanostructures N1", N2" par rapport à l'axe y tels que représentés sur la figure 7.

Les nanostructures N1", N2" sont distribuées suivant l'axe y à deux positions différentes selon l'axe y. Ces deux nanostructures N1", N2" vont produire des images décalées, comme illustré sur la figure 7.

On considère que la nanostructure N"1 forme la nanostructure de référence.

Pour pouvoir moyenner les images, les images sont préalablement recalées selon les étapes suivantes :

- lors d'une première étape on acquiert l'image I de l'échantillon à partir des rayons X générés par la nanostructure N1" ;
- lors d'une étape suivante on acquiert l'image I0 de l'échantillon à partir des rayons X générés par la nanostructure N2", cette nanostructure N2" étant décalée selon l'axe y par rapport à la nanostructure N1";
- lors d'une étape suivante on effectue un recalage de l'image **I0,** par rapport à l'image I acquise avec la nanostructure N1". Ce recalage est obtenu par des méthodes bien connues, telles que celles décrites dans le document Zitova et al, Image registration methods: a survey, Image and Vision Computing 21 (2003) 977-1000. On obtient alors l'image et aboutit à l'image I1;

- lors d'une étape suivante on moyenne l'image recalée I1 et l'image acquise I pour obtenir l'image moyennée I2 comme cela est schématisé sur la figure 8.

Dans le cas d'une multitude de nanostructures distribuées suivant l'axe y et conduisant donc à la formation d'une multitude de projections toutes décalées entre elles, les étapes sont répétées pour chaque nanostructure afin de ramener toutes les images dans le même repère.

Dans le cas d'un décalage des nanostructures le long de l'axe z, le procédé de recalage est similaire au procédé de recalage le long de l'axe y.

Dans le cas de la cible à neufs nanostructures de la figure 4, on enregistre les 9 radiographies et par traitement les 9 radiographies sont ramenées par rééchantillonnage au même grandissement et dans la même position, ceux de la radiographie de la nanostructure centrale.

Pour cela, on applique successivement les étapes des procédé de recalage suivant les axes x, y et z tels que décrit précédemment en fonction des positions des nanostructures.

Il sera compris que le choix de la nanostructure de référence est arbitraire.

Nous allons maintenant décrire une simulation d'un exemple de mise en oeuvre du dispositif d'imagerie selon l'invention.

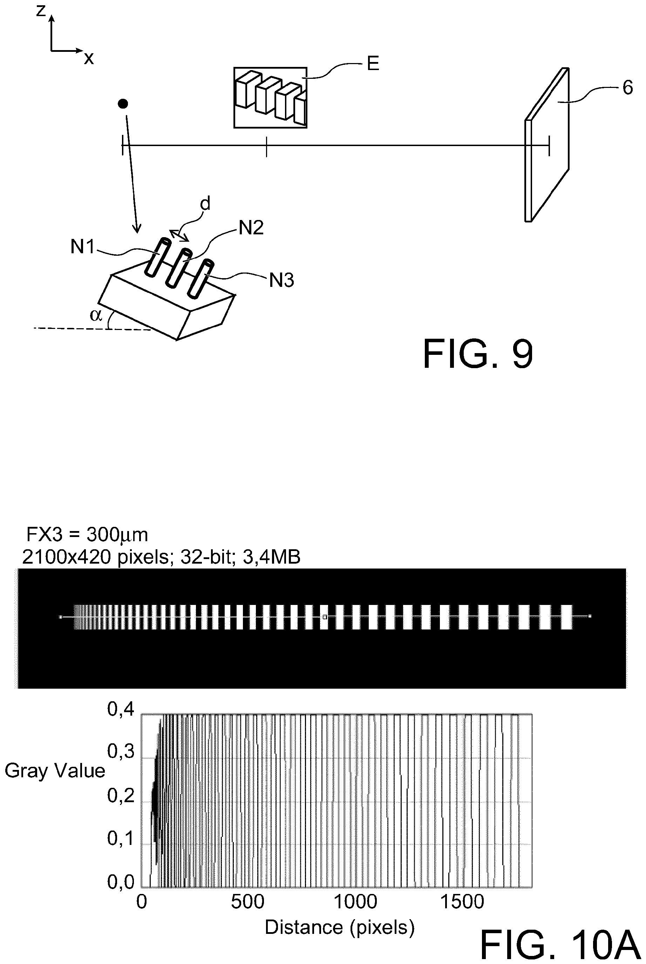

Sur la figure 9, on peut voir schématisé le dispositif comportant une source de rayons à trois nanostructures N1, N2, N3, un détecteur et un échantillon E formé par une mire.

La source de rayons X est disposée par rapport à l'axe X de sorte que les trois nanostructures soient alignées le long de l'axe x et soient inclinées d'un angle α de 45° par rapport à l'axe x. Ainsi les nanostructures sont décalées par rapport l'axe x et par rapport à l'axe z. La nanostructure N3 est considérée comme la nanostructure de référence.

Les radiographies obtenues par les trois nanostructures sont donc à trois grandissements différents.

Si on note FXn la distance entre la nanostructure Nn et la mire, et d la distance entre deux nanostructures, les distances FX1, FX2 et Fx3 s'écrivent

$$FX1 = FX3 + 2d×√2/2$$

$$FX2 = FX3 + d×√2/2$$

Par exemple, on choisit FX3 = 300 µm et d = 2 µm et sachant que l'on a choisit α = 45°, alors

$$FX1 = 302,82 \text{ µm}$$

$$FX2 = 301,41 \text{ µm}$$

$$FX3 = 300 \text{ µm.}$$

L'angle d'inclinaison α de 45° est avantageux car il permet d'avoir le moins d'ombrage d'un nanofil par un autre.

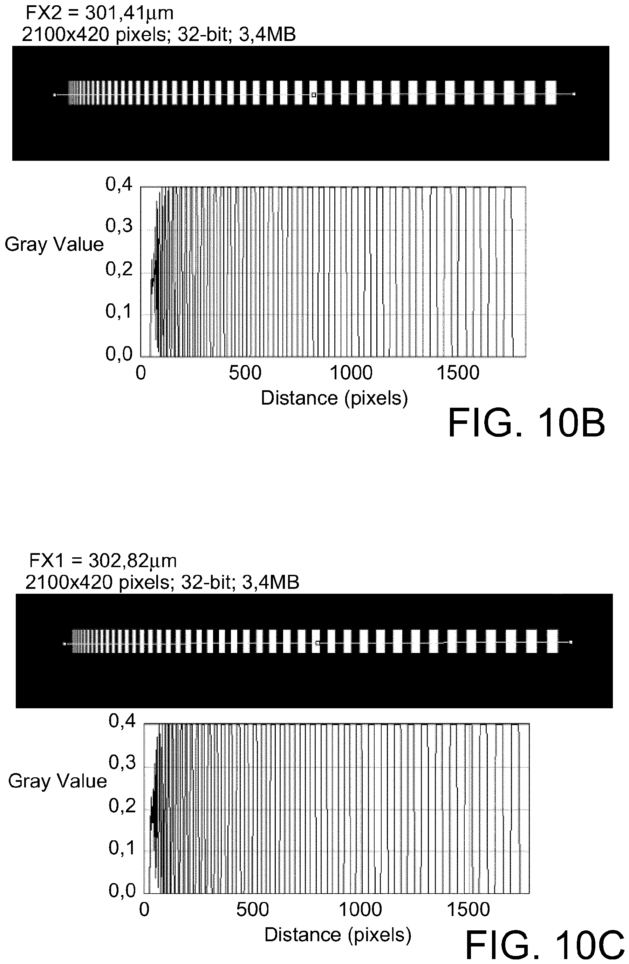

Sur les figures 10A, 10B et 10C, on peut voir respectivement la radiographie et le profil de la radiographie obtenus à partir des rayons X émis par chaque nanostructure N1, N2 et N3.

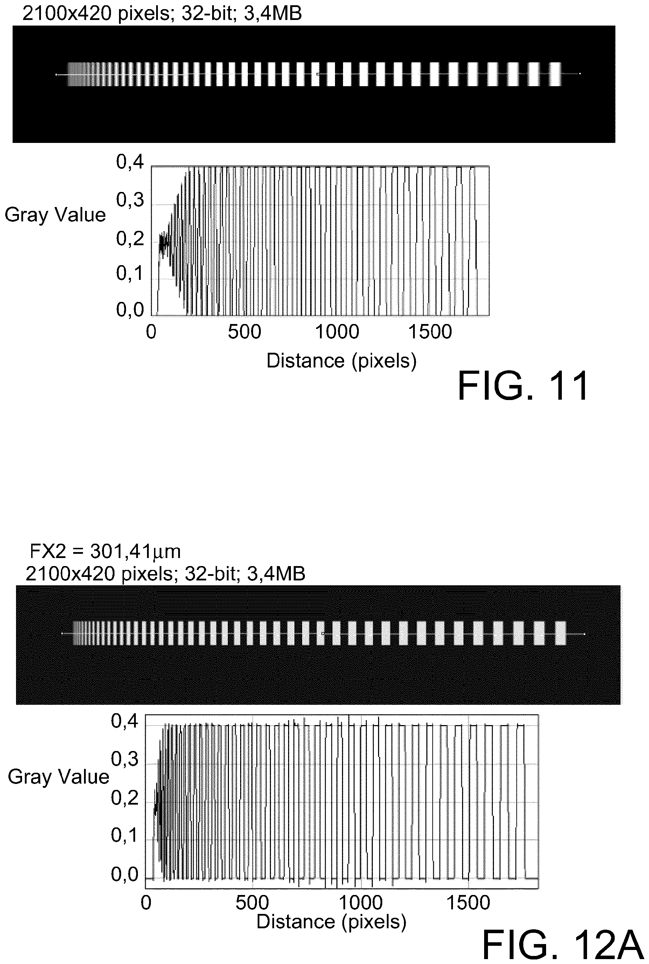

Sur la figure 11, on peut voir la radiographie obtenue par moyennage des trois radiographies des figures 10A, 10B et 10C et le profil de celle-ci sans avoir recalé les radiographies des figures 11A et 11B. On constate que l'on obtient une image floue et, sur le profil, on constate par comparaison avec les autres profils qu'il y a une perte de résolution.

La perte de résolution est due à l'agrandissement de la taille de source, qui est la somme des contributions des trois nanostructures.

Comme expliqué ci-dessus, on ramène les trois images au même grandissement. Pour cela, on peut par exemple mettre en oeuvre une interpolation bicubique pour ramener les trois images au grandissement maximum, comme décrit par exemple dans le document E. H. W. Meijering, "A chronology of interpolation: From ancient astronomy to modern signal and image processing," Proc. IEEE, vol. 90, no. 3, pp. 319-342, Mar. 2002.

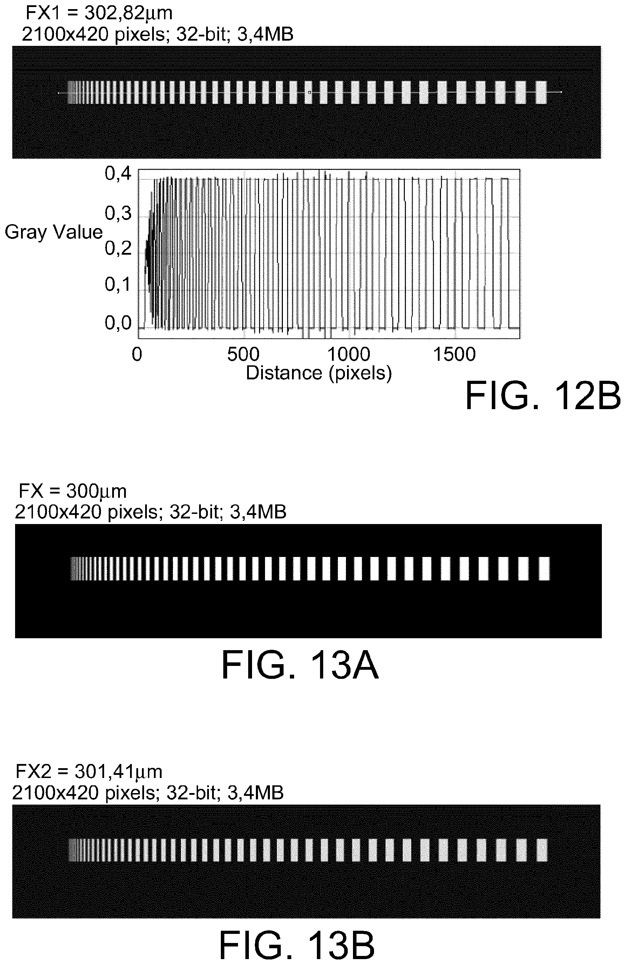

Sur les figures 12A et 12B, on peut voir les images des nanostructures N2 et N1 après cet agrandissement, ainsi que leur profil.

La taille de l'image, i.e. le nombre de pixels qui la compose, obtenue à partir de la nanostructure N1 est égale à 2110 x 420 (2110 = 2100 x 301,82/300).

La taille de l'image obtenue à partir de la nanostructure N2 est égale à 2120 x 420 (2110 = 2100 x 302,82/300).

La taille des images est maintenant différente d'une nanostructure à l'autre. Pour pouvoir les sommer, des pixels sont ajoutés. L'ajout de pixels est obtenu par exemple par la méthode dite « zero-padding ». Cette méthode est par exemple décrite dans l'ouvrage « The Essential Guide to Image Processing », Alan Conrad Bovik, Elsevier, 2009, paragraphe 5.4.6, p.110.

En appliquant cette méthode, des pixels sont ajoutés à l'image obtenue à partir de la nanostructure N1 et celle obtenue à partir de la nanostructure N3 pour atteindre le nombre de pixels de l'image obtenue à partir de la nanostructure N2, i.e. 2120 x 420.

Les images ainsi obtenus à partir des nanostructures N3 et N1 sont représentées sur les figures 13A et 13B respectivement.

Les trois images peuvent maintenant être sommées. On obtient alors l'image représentée sur la figure 14.

Sur la figure 15 on peut voir le profil de l'image de la figure 14 et, en comparant au profil de la figure 12, on observe une sensible amélioration de la résolution grâce au traitement des images par interpolation bicubique avant leur moyennage.

Grâce à l'invention, on obtient bien une source de rayons X de taille réduite permettant de réaliser une imagerie de nanostructures enterrées avec une bonne résolution.

**Revendications**

1. Source de rayons X comportant une source d'électrons (8) générant un faisceau d'électrons (9) de taille nanométrique et une cible (10, 110), ladite cible (10, 110) étant destinée à émettre un faisceau de rayons X (11) par illumination par le faisceau d'électrons (9), ladite cible (10, 110) comportant au moins une nanostructure (N) de forme allongée, ladite nanostructure (N) comprenant à une extrémité libre un matériau (C) apte à générer des rayons X de forte énergie, ladite nanostructure comprenant une première portion solidaire d'un substrat par une extrémité, ladite première portion étant en un matériau (NN) apte à générer des rayons X de faible énergie et ayant un numéro atomique inférieur à 15, et une deuxième portion, ladite deuxième portion étant formée par le matériau (C) apte à générer des rayons X de forte énergie et ayant un numéro atomique supérieur à 20, lesdites première (NN) et deuxième (C) portions présentant une dimension transversale comprise entre 1 nm et 100 nm.

2. Source de rayons X selon la revendication 1, dans laquelle le matériau de la première portion est le silicium ou le carbone.

3. Source de rayons X selon la revendication 1 ou 2, dans lequel le matériau de la deuxième portion (C) est l'or ou le cuivre.

4. Source de rayons X selon la revendication 1, 2 ou 3, dans laquelle les matériaux de première (NN) et deuxième (C) portions offrent une bonne conductivité thermique.

5. Source de rayons X selon l'une des revendications 1 à 4, dans laquelle la cible (110) comporte une pluralité de nanostructures juxtaposées, la distance séparant deux nanostructures voisines étant avantageusement de l'ordre de quelques dizaines de nanomètres.

6. Source de rayons X selon l'une des revendications 1 à 5, dans laquelle la source d'électrons est un microscope électronique à balayage.

7. Source de rayons X selon les revendications 5 et 6, dans laquelle la disposition des nanostructures est enregistrée dans une commande de balayage du microscope électronique à balayage de sorte que le faisceau d'électrons émis par le microscope électronique à balayage éclaire successivement toutes les nanostructures.

8. Source de rayons selon l'une des revendications 1 à 7, dans lequel la hauteur de la nanostructure (N) est supérieure ou égale à 500 nm.

9. Source de rayons X selon l'une des revendications 1 à 8, dans laquelle la première portion (NN) est formée par un nanofil et la deuxième portion (C) est formée par un catalyseur ayant servi à la formation du nanofil.

10. Source de rayons X selon l'une des revendications 1 à 8, dans laquelle la nanostructure est réalisée par gravure, par exemple gravure ionique réactive, dans un substrat formé dans le matériau de la deuxième portion recouvert d'une couche dans le matériau de la première portion.

11. Source de rayons X selon l'une des revendications 1 à 8, dans laquelle la nanostructure est réalisée par usinage, par exemple par usinage ionique, dans un substrat formé dans le matériau de la deuxième portion recouvert d'une couche dans le matériau de la première portion.

12. Dispositif d'imagerie par rayons X comportant au moins une source selon l'une des revendications 1 à 11, un porte-échantillon destiné à porter l'échantillon et au moins un détecteur (6) direct ou indirect des rayons X transmis par l'échantillon, le détecteur (6) étant avantageusement un détecteur à comptage de photons X.

13. Dispositif d'imagerie par rayons X selon la revendication 12, dans lequel le porte-échantillon (4) est mobile au moins en rotation de sorte à permettre une imagerie par tomographie.

14. Procédé d'imagerie d'un échantillon comportant au moins une microstructure et/ou au moins une nanostructure mettant en oeuvre le dispositif selon la revendication 12 ou 13, comportant les étapes :

    a) illumination de la nanostructure (N) par le faisceau d'électrons (9),
    b) collecte par le détecteur (6) des rayons X transmis par l'échantillon de sorte à obtenir une radiographie de l'échantillon.

15. Procédé d'imagerie selon la revendication 14, dans lequel la source de rayons X comporte plusieurs nanostructures juxtaposées et la source d'électrons est un microscope électronique à balayage, dans lequel les étapes a) et b) sont appliquées à chaque nanostructure successivement, ledit procédé comportant les étapes supplémentaires :

    c) de traitement de chacune des radiographie de sorte à obtenir des radiographies offrant le même agrandissement et/ou étant recalées par rapport à une radiographie de référence,
    d) de moyennage des radiographies ainsi traitées.

**Patentansprüche**

1. Röntgenstrahlungsquelle, umfassend eine Elektronenquelle (8), die einen Elektronenstrahl (9) mit Nanometergröße erzeugt, und ein Target (10, 110), wobei das Target (10, 110) dazu ausgelegt ist, bei Bestrahlung durch den Elektronenstrahl (9) ein Bündel von Röntgenstrahlen (11) auszusenden, wobei das Target (10, 110) wenigstens eine Nanostruktur (N) mit länglicher Form umfasst, wobei die Nanostruktur (N) an einem freien Ende ein Material (C) umfasst, das dazu ausgelegt ist, Röntgenstrahlen mit hoher Energie zu erzeugen, wobei die Nanostruktur einen ersten Bereich umfasst, der an einem Ende mit einem Substrat verbunden ist, wobei der erste Bereich aus einem Material (NN) ist, das dazu ausgelegt ist, Röntgenstrahlen mit niedriger Energie zu erzeugen und eine Atomzahl kleiner als 15 hat, sowie einen zweiten Bereich, wobei der zweite Bereich durch das Material (C) gebildet ist, das dazu ausgelegt ist, Röntgenstrahlen mit hoher Energie zu erzeugen, und eine Atomzahl größer als 20 hat, wobei der erste (NN) und der zweite (C) Bereich eine Querabmessung aufweisen, die zwischen 1 nm und 100 nm enthalten ist.

2. Röntgenstrahlungsquelle nach Anspruch 1, wobei das Material des ersten Bereichs Silizium oder Kohlenstoff ist.

3. Röntgenstrahlungsquelle nach Anspruch 1 oder 2, wobei das Material des zweiten Bereichs (C) Gold oder Kupfer ist.

4. Röntgenstrahlungsquelle nach Anspruch 1, 2 oder 3, wobei die Materialen des ersten (NN) und des zweiten (C) Bereichs eine gute thermische Leitfähigkeit bieten.

5. Röntgenstrahlungsquelle nach einem der Ansprüche 1 bis 4, wobei das Target (110) eine Mehrzahl von nebeneinander angeordneten Nanostrukturen umfasst, wobei der Abstand, der zwei benachbarte Nanostrukturen trennt, vorzugsweise in der Größenordnung von einigen zehn Nanometern ist.

6. Röntgenstrahlungsquelle nach einem der Ansprüche 1 bis 5, wobei die Elektronenquelle ein Rasterelektronenmikroskop ist.

7. Röntgenstrahlungsquelle nach den Ansprüchen 5 und 6, wobei die Anordnung der Nanostrukturen in einer Rastersteuerung des Rasterelektronenmikroskops derart gespeichert ist, dass der von dem Rasterelektronenmikroskop emittierte Elektronenstrahl sukzessive alle Nanostrukturen bestrahlt.

8. Röntgenstrahlungsquelle nach einem der Ansprüche 1 bis 7, wobei die Höhe der Nanostruktur (N) größer oder gleich 500 nm ist.

9. Röntgenstrahlungsquelle nach einem der Ansprüche 1 bis 8, wobei der erste Bereich (NN) durch einen Nanodraht gebildet ist, und der zweite Bereich (C) durch einen Katalysator gebildet ist, der zur Bildung des Nanodrahts gedient hat.

10. Röntgenstrahlungsquelle nach einem der Ansprüche 1 bis 8, wobei die Nanostruktur durch Ätzen realisiert ist, beispielsweise reaktives Ionenätzen, in einem Substrat, das aus dem Material des zweiten Bereichs gebildet ist, das mit einer Schicht aus dem Material des ersten Bereichs bedeckt ist.

11. Röntgenstrahlungsquelle nach einem der Ansprüche 1 bis 8, wobei die Nanostruktur durch Bearbeitung realisiert ist, beispielsweise durch Ionenbearbeitung, in einem Substrat, das aus dem Material des zweiten Bereichs gebildet ist, das mit einer Schicht aus dem Material des ersten Bereichs bedeckt ist.

12. Röntgenstrahlungs-Bildgebungsvorrichtung, umfassend wenigstens eine Quelle nach einem der Ansprüche 1 bis 11, einen Probenträger, der dazu ausgelegt ist, die Probe zu tragen, sowie wenigstens einen direkten oder indirekten Detektor (6) für die durch die Probe transmittierten Röntgenstrahlen, wobei der Detektor (6) vorzugsweise ein Röntgenphotonenzähler-Detektor ist.

13. Röntgenstrahlungs-Bildgebungsvorrichtung nach Anspruch 12, wobei der Probenträger (4) wenigstens drehbeweglich ist, derart, dass eine Bildgebung durch Tomographie ermöglicht wird.

14. Verfahren zur Bildgebung einer Probe, umfassend wenigstens eine Mikrostruktur und/oder wenigstens eine Nanostruktur, das die Vorrichtung nach Anspruch 12 oder 13 verwendet, umfassend die Schritte:

a) Bestrahlen der Nanostruktur (N) mit dem Elektronenstrahl (9),
b) Auffangen der durch die Probe transmittierten Röntgenstrahlen durch den Detektor (6) derart, dass eine Radiographie der Probe erhalten wird.

15. Verfahren zur Bildgebung nach Anspruch 14, wobei die Röntgenstrahlungsquelle mehrere nebeneinander angeordnete Nanostrukturen umfasst, und die Elektronenquelle ein Rasterelektronenmikroskop ist, wobei die Schritte a) und b) sukzessive auf jede Nanostruktur angewandt werden, wobei das Verfahren die zusätzlichen Schritte umfasst:

c) Bearbeiten jeder der Radiographien derart, dass Radiographien erhalten werden, die die gleiche Vergrößerung bieten und/oder bezüglich einer Referenz-Radiographie eingestellt sind,
d) Mitteln der derart bearbeiteten Radiographien.

**Claims**

1. A source of X-rays comprising a source of electrons generating an electron beam (9) of nanometric size and a target, said target (10, 110) being configured to send an X-ray beam (11) by illumination by the electron beam (9), said target (10, 110) comprising at least one elongated nanostructure (N), said nanostructure (N) comprising at a free end a material ©capable of generating high-energy X-rays, said elongated nanostructure comprising a first portion attached to a substrate by an end, said first portion being in material (NN) capable of generating low-energy X-rays and having an atomic number less than 15, and a second portion, said second portion being in the material © capable of generating high-energy X-rays and having an atomic number greater than 20, said first (NN) and second (C) portions having a transverse dimension between 1 nm and 100 nm.

2. The source of X-rays according to claim 1, in which the material of the first portion is silicon or carbon.

3. The source of X-rays according to claim 1 or 2, in which the material of the second portion (C) is gold or copper.

4. The source of X-rays according to claim 1, 2 or 3, in which the materials de first and second (C) portions offer good thermal conductivity.

5. The source of X-rays according to one of the claims 1 to 4, in which the target (110) comprises a plurality of juxtaposed nanostructures, the distance separating two adjacent nanostructures being advantageously of the order of some tens of nanometers.

6. The source of X-rays according to one of the claims 1 to 5, in which the source of electrons is a scanning electron microscope.

7. The source of X-rays according to claims 5 and 6, in which the disposition of the nanostructures is registered in a scanning control of the scanning electron microscope such that the electron beam sent by the scanning electron microscope successively illuminates all the nanostructures.

8. The source of rays as claimed in any one of the claims 1 to 7, in which the height of the nanostructure (N) is greater than or equal to 500 nm.

9. The source of X-rays according to one of the claims 1 to 8, in which the first portion (NN) is formed by a nanowire and the second portion (C) is formed by a catalyst having served to form the nanowire.

10. The source of X-rays according to one of the claims 1 to 8, in which the nanostructure is made by etching, for example by reactive ionic etching, in a substrate formed in the material of the second portion covered by a layer in the material of the first portion.

11. The source of X-rays according to one of the claims 1 to 8, in which the nanostructure is made by machining, for example by ionic machining, in a substrate formed in the material of the second portion covered by a layer in the material of the first portion.

12. An X-ray imaging device comprising at least one source according to one of the claims 1 to 11, a specimen holder configured to hold the specimen and at least one direct or indirect detector of X-rays transmitted by the specimen, the detector (6) being advantageously a photon-counting detector X.

13. The X-ray imaging device according to Claim 12, in which the specimen holder is mobile at least in rotation so as to allow imagery by tomography.

14. An imaging process of a specimen comprising at least one microstructure and/or at least one nanostructure using a device according to claim 12 or 13, comprising the steps of:

a) illumination of the nanostructure by the electron beam,
b) collection by the detector of X-rays transmitted by the specimen so as to obtain an X-ray of the specimen.

15. The imaging process as claimed in Claim 14, in which the source of X-rays comprises several juxtaposed nanostructures and the source of electrons is a scanning electron microscope, in which steps a) and b) are applied to each nanostructure successively, said process comprising the additional steps:

c) of processing of each of the X-rays so as to obtain X-rays providing the same enlargement and/or being readjusted relative to a reference X-ray,
d) of averaging of the X-rays processed in this way.

## FIG. 1

## FIG. 2

FIG. 3

FIG. 4

**FIG. 5**

Image($D_{so}$)

$$Pixel\_réel = pix.\frac{D_{so}}{D_{so} + D_{od}}$$

$$I2 = (Image(D_{so}) + I1)\,/2$$

I0=Image($D'_{so}$)

$$Pixel\_réel' = pix.\frac{D'_{so}}{D'_{so} + D'_{od}}$$

I1=ré-échantillonnage(I0)

$$Pixel\_réel' = Pixel\_réel$$

**FIG. 6**

FIG. 7

Image (N1")

$$I2 = I1 + \text{Image (N1")}$$

I0=Image (N2")

I1

FIG. 8

FIG. 9

FX3 = 300μm
2100x420 pixels; 32-bit; 3,4MB

FIG. 10A

FX2 = 301,41µm
2100x420 pixels; 32-bit; 3,4MB

FIG. 10B

FX1 = 302,82µm
2100x420 pixels; 32-bit; 3,4MB

FIG. 10C

2100x420 pixels; 32-bit; 3,4MB

**FIG. 11**

FX2 = 301,41μm
2100x420 pixels; 32-bit; 3,4MB

**FIG. 12A**

FX1 = 302,82µm
2100x420 pixels; 32-bit; 3,4MB

## FIG. 12B

FX = 300µm
2100x420 pixels; 32-bit; 3,4MB

## FIG. 13A

FX2 = 301,41µm
2100x420 pixels; 32-bit; 3,4MB

## FIG. 13B

2100x420 pixels; 32-bit; 3,4MB

# FIG. 14

# FIG. 15

# FIG. 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004064168 A

- US 20120082396 A

**Littérature non-brevet citée dans la description**

- **WANG, Y et al.** *Nature Nanotechnology,* 2006, vol. 1, 186-189
- **GIANNUZZI, L. ; STEVIE, F. ; GIANNUZZI, L. A. ; KEMPSHALL, B. W. ; SCHWARZ, S. M. ; LOMNESS, J. K. ; PRENITZER, B. I. ; STEVIE, F. A.,.** FIB Lift-Out Specimen Préparation Techniques. In Introduction to Focused Ion Beams. Springer US, 2005, 201-228
- **HUA WANG ; MINGHUA SUN ; KANG DING ; MARTIN T. HILL ; CUN-ZHENG NING.** A Top-down Approach to Fabrication of High Quality Vertical Heterostructure Nanowire Arrays. *Nano Letters,* 2011, vol. 11 (4), 1646-1650

- **REIMER, L.** Scanning Electron Microscopy. Springer, 1998, 118
- **ZITOVA et al.** Image registration methods: a survey. *Image and Vision Computing,* 2003, vol. 21, 977-1000
- **E. H. W. MEIJERING.** A chronology of interpolation: From ancient astronomy to modern signal and image processing. *Proc. IEEE,* Mars 2002, vol. 90 (3), 319-342
- **ALAN CONRAD BOVIK.** The Essential Guide to Image Processing. Elsevier, 110